# EUROPÄISCHE PATENTSCHRIFT

(11) **EP 1 247 402 B1**
(45) Veröffentlichungstag und Bekanntmachung des Hinweises auf die Patenterteilung: **29.10.2003**
(21) Anmeldenummer: 00964046.7
(22) Anmeldetag: 28.08.2000
(51) Int. Cl.: H04N 7/24

(54) **VERFAHREN ZUM ÄNDERN DES INFORMATIONSINHALTES EINES DIGITALEN VIDEO-TRANSPORTSTROMES IN AUSGEWÄHLTEN REGIONEN**
METHOD FOR MODIFYING THE INFORMATION CONTENT OF A TRANSPORT STREAM OF DIGITAL VIDEO DATA IN SELECTED REGIONS
PROCEDE POUR MODIFIER LE CONTENU INFORMATIF D'UN FLUX DE TRANSPORT DE DONNEES VIDEO DANS DES REGIONS SELECTIONNEES

(30) Priorität: 14.12.1999 DE 19960295
(43) Veröffentlichungstag der Anmeldung: 09.10.2002
(73) Patentinhaber: Rohde & Schwarz FTK GmbH, 12557 Berlin (DE)
(72) Erfinder: SCHWIERTZ, Jacek, 12347 Berlin (DE); ZOMBETZKI, Jens, 30916 Isernhagen (DE)
(74) Vertreter: Körfer, Thomas, Dipl.-Phys.
(86) Internationale Anmeldenummer: EP0008386
(87) Internationale Veröffentlichungsnummer: WO01045416

(56) Entgegenhaltungen:
- EP-A- 0 805 598
- EP-A- 0 926 894
- WO-A-99/37048

## Beschreibung

Die Erfindung geht aus von einem Verfahren laut Oberbegriff des Hauptanspruches.

Das in Europa geplante digitale Fernsehen basiert auf dem Standard DVB (Digital Video Broadcasting). Die zu übertragenden Daten werden dabei nach dem sogenannten MPEG2-Verfahren komprimiert und zu einem zusammenhängenden Transportstrom zusammengefaßt. Die einzelnen Daten innerhalb des Transportstromes werden in Datenpaketen gleicher Länge von 188 Bytes transportiert. Jede Informationsart im Transportstrom ist durch einen sogenannten Paket-Identifizierer PID (Paket Identifier) gekennzeichnet, der im HEADER des Datenstromes transportiert wird. Damit die transportierten Daten im Empfänger wieder entpackt und richtig identifiziert werden können, müssen zusätzlich noch im Transportstrom Verwaltungsinformationen transportiert werden, die keine Video-Audio-Daten sind. Diese Verwaltungsinformationen werden als Tabellen gekennzeichnet. So gibt es beispielsweise sogenannte PAT-Tabellen (Program Association Table mit allen Video/Audioströmen), PMT-Tabellen (Program Map Tabele) für einzelne Programme oder SDT-Tabellen (Informationen über Zusatzdaten) etc. Jede Tabelle wird mit einer vorbestimmten PID transportiert, PAT wird beispielsweise immer mit der PID0 transportiert. Der Empfänger arbeitet sich über diese Tabellen zu den einzelnen Programmen und Diensten herunter und am Ende der Hierarchie steht immer eine PID der Transportpakete, die er aus dem Transportstrom extrahieren soll. So wird z.B. über PAT, PMT und SDT ermittelt, daß die PID des Videotextes der ARD 135 und die des ZDF 257 ist.

Der gesamte MPEG Transportstrom muß immer eine konstante Datenrate haben. Da der Anteil der Audio/Video-Informationen im Transportstrom jedoch schwankt, muß für eine konstante Datenrate der Transportstrom mit sogenannten Stopfpaketen ohne Nutzinformation (Null-Pakete) ausfgefüllt werden. Die PID der Null-Pakete ist fest 0x1FFF (siehe beispielsweise "Einführung in den DVB-Datenrundfunk, Fernseh- und Kino-Technik 52, Jahrgang Nr. 6, 1998, Seiten 323 bis 330).

Bei diesem DVB-System ist es oftmals erforderlich und wünschenswert, bestimmte Informationsinhalte in ausgewählten Regionen zu ändern und beispielsweise durch andere Informationsinhalte zu ersetzen. Eine Möglichkeit hierfür ist, in der ausgewählten Region den MPEG-komprimierten Transportstrom durch einen Demultiplexer in seine einzelnen Elementarströme aufzuteilen und diese dann zu ändern bzw. zu ersetzen und dann wieder mit einem Multiplexer die einzelnen Elementarströme zu einem MPEG-komprimierten neuen Transportstrom zusammenzusetzen.

Ein System, in dem dieses realisiert ist, ist in der EP 0 926 894 A1 beschrieben. Hierbei handelt es sich um einen Verschlüssler für ein digitales System zur Übertragung von Video-, Audio- oder Teletext-Daten. Diese Video-, Audio- und Teletext-Daten werden über einen Multiplexer in einen seriellen Datenstrom gewandelt, vom eigentlichen Verschlüssler weiterverarbeitet und in einem Modulator zur Übertragung an das entsprechende Übertragungsmedium (Satellit, Kabel, Netzwerk usw.) angepaßt. In den einzelnen Funktionseinheiten des Verschlüsslers werden alle Datenpakete ohne Inhalt gezählt, die Dateninhalte aller Datenpakete mit einer bestimmten Identifizierungsnummer ausgelesen und in einem lokalen Datenspeicher abgespeichert, alle ausgelesenen Datenpakete gelöscht, die gelöschten Datenpakete mit einer neuen Identifizierungsnummer versehen, gelöschte Datenpakete identifiziert und mit einem neuen Dateninhalt beschrieben sowie anschließend verschlüsselt.

Dieses Verfahren hat den Nachteil, daß dabei auch die im ursprünglichen Transportstrom codierten Zeitinformationen und Abhängigkeiten geändert werden. Außerdem ist dazu eine relativ aufwendige Gerätetechnik erforderlich.

Es ist Aufgabe der Erfindung, ein Verfahren zum Ändern des Informationsinhaltes eines DVB-Transportstromes in ausgewählten Regionen aufzuzeigen, das mit geringem Geräteaufwand und ohne Änderung des Originaltransportstromes durchführbar ist.

Diese Aufgabe wird ausgehend von einem Verfahren laut Oberbegriff des Hauptanspruches durch dessen kennzeichnende Merkmale gelöst.

Beim erfindungsgemäßen Verfahren bleibt die zeitliche Konsistenz des Original-Transportstromes erhalten, indem unmittelbar während der Durchlaufzeit des Transportstromes die gewünschten PID-identifizierten Datenpakete extrahiert und durch andere Datenpakete ersetzt werden. Auf diese Weise kann durch Ersatz von ausgewählten Datenpaketen im Originaltransportstrom durch Datenpakete mit anderem Informationsinhalt ein neuer Transportstrom mit für die Region besser geeignetem Informationsinhalt erzeugt und über terrestrische Sender oder über Kabel ausgestrahlt werden. So können beispielsweise in einer bestimmten Landesregion über die dortigen terrestrischen Sender Regionalnachrichten oder regionale Informationen zugeschaltet werden, beispielsweise Informationen über Touristik. Dafür werden andere Datenpakete, die für diese Region nicht so interessant sind, extrahiert. Bei Ersatz dieser extrahierten Datenpakete durch neue Datenpakete bleiben die PID und auch die im Empfänger ausgewerteten Tabellen erhalten.

Das Geräte zum Ausführen dieses Verfahrens kann sehr einfach und preiswert realisiert werden, es genügt ein handelsüblicher PC mit einer Zusatzschaltung, der eingangsseitig der zu ändernde Original-Transportstrom zugeführt wird. Über den PC wird die PID der zu ersetzenden Datenpakete eingegeben, in der Zusatzschaltung werden die Datenpakete mit dieser vorgegebenen PID erkannt und extrahiert und durch Datenpakete mit neuem Informationsinhalt, die für die MPEG2-Norm vorbereitet sind und die entsprechend genormte Länge besitzen und die dann mit der gleichen PID dem Datenstrom zugesetzt werden, ohne daß die zeitliche Konsistenz des Originaldatenstroms geändert wird. Der so aufbereitete neue Transportstrom wird dann vom Ausgang dieser Zusatzschaltung dem eigentlichen terrestrischen Sender oder Kabelverteiler der ausgewählten Region zugeführt.

## Patentansprüche

1. Verfahren zum Ändern des Informationsinhalts eines über terrestrische Sender oder Kabel auszustrahlenden, nach dem MPEG 2-Standard aufbereiteten digitalen Video-Transportstroms in ausgewählten Regionen, wobei in der ausgewählten Region vorbestimmte, durch ihre PID gekennzeichnete Datenpakete extrahiert werden und durch andere Datenpakete ersetzt werden,
**dadurch gekennzeichnet,**
**daß** die extrahierten Datenpakete während der Durchlaufzeit des Transportstroms, ohne daß die zeitliche Konsistenz des Originaldatenstroms geändert wird, ersetzt werden, wobei die PID, welche das Datenpaket mit einem anderen Informationsinhalt kennzeichnet, mit der PID des extrahierten Datenpakets identisch ist.

## Claims

1. Method for modifying.the information content of a transport stream of digital video data, which has been prepared in accordance with the MPEG2 standard and is to be transmitted via a terrestrial transmitter or cable, in selected regions, wherein data packets predetermined in the selected region and marked by their PID are extracted and replaced with different data packets,
**characterised in that**
during the run time of the transport stream, the extracted data packets are replaced without modifying the time consistency of the original data stream, wherein the AID marking the data packet with a different information content is identical to the PID of the extracted data packet.

## Revendications

1. Procédé pour modifier le contenu informatif d'un flux de transport de données vidéo traité selon le standard MPEG 2 et à diffuser au moyen d'émetteurs terrestres ou par câble dans des régions sélectionnées, des paquets de données prédéfinis et identifiés par leur PID étant extraits dans la région sélectionnée et remplacés par d'autres paquets de données,
**caractérisé en ce que**
les paquets de données extraits sont remplacés pendant le temps de passage du flux de transport, sans que la consistance dans le temps du flux de données d'origine soit modifiée, le PID, qui identifie le paquet de données avec un autre contenu informatif, étant identique au PID du paquet de données extrait.
